# FASCICULE DE BREVET EUROPEEN

(11) **EP 1 950 858 B1**
(45) Date de publication et mention de la délivrance du brevet: **02.11.2011**
(21) Numéro de dépôt: 07360003.3
(22) Date de dépôt: 23.01.2007
(51) Int. Cl.: H02G 3/12

(54) **Dispositif de fixation pour des appareillages électriques comportant des griffes**
Befestigungsvorrichtung für Installationsgeräte mittels Krallen
Fastening elements for installation devices by using claws

(43) Date de publication de la demande: 30.07.2008
(60) Demande divisionnaire: 10007671.0
(73) Titulaire: AB Plast S.r.l., 25018 Montichiari (IT)
(72) Inventeur: Lorenzetto, Giorgio, 25045 Castegnato (Bs) (IT)
(74) Mandataire: Nuss, Pierre

(56) Documents cités:
- EP-A- 0 915 537
- DE-A1- 1 515 601
- DE-C1- 4 125 767
- DE-U1- 29 918 584

## Description

La présente invention concerne des appareillages électriques, domestiques, semi-encastrés, tels que les prises de courant, les interrupteurs, les détecteurs infrarouges, ... qui sont fixés dans des boîtes d'encastrement par l'intermédiaire de griffes.

Actuellement, les griffes de fixation de tels appareillages, qui sont destinées à s'accrocher dans les parois correspondantes des boîtes d'encastrement sous l'effet d'un serrage par vis ayant tendance à faire pivoter ces griffes en direction desdites parois, sont généralement montées sur des supports correspondants des appareillages et rappelées en position de repos par l'intermédiaire de moyens élastiques tels qu'une bande élastique entourant totalement l'appareillage et s'appuyant sur les faces externes des griffes, soit encore au moyen de dispositifs à ressort tels que des lames de ressorts de flexion rivetées sur les griffes ou encore par des ressorts de torsion agissant sur lesdites griffes. Enfin, il existe également un montage de griffes, dans lequel celles-ci sont en appui contre des languettes-ressorts des boîtiers.

Les supports des griffes font partie intégrante du corps de l'appareillage et sont donc réalisés dans la même matière que celui-ci, à savoir en une matière synthétique isolante. Les vis de serrage sont vissées dans des taraudages prévus dans lesdits supports ou dans des inserts métalliques rapportés dans ces derniers.

Ces griffes connues permettent de réaliser un serrage relativement correct dans un boîtier. Cependant, en cas de nécessité d'un serrage particulièrement fort ou lorsque la mise en place de l'appareillage dans le boîtier s'effectue avec difficulté, l'installateur à tendance à exercer une forte pression sur la vis, de sorte que le support en matière synthétique, dans lequel est serrée la vis, a tendance à se déformer, parfois à un point tel que la vis ne peut plus être manoeuvrée, voire que le support est totalement détérioré.

En outre, les moyens de rappel des griffes présentent un certain nombre d'inconvénients. Ainsi, les moyens élastiques de rappel vieillissent très rapidement, ce qui entraîne leur destruction. Les dispositifs de rappel à ressort, tels que des lames rivetées sur les griffes, notamment connus par DE-A-38 23 117, présentent l'inconvénient de fournir une solution relativement complexe et onéreuse au problème du rappel des griffes, et le montage de ressorts de torsion ou de flexion, tel qu'il est proposé par FR-A-2 770 937, est généralement difficile à réaliser et il existe un risque de dégradation du ressort par dépassement de sa limite élastique.

Enfin, il n'existe pas actuellement de solution fiable concernant une isolation électrique entre griffes et plaque de support de l'appareillage. De plus, un escamotage correct des griffes en position de repos, évitant tout risque de détérioration des câbles débouchant dans le boîtier.

On connaît également par DE-A-41 25 767 un dispositif de fixation de griffes sur un appareillage électrique. Dans ce dispositif, les griffes de fixation, métalliques, sont directement en contact avec la vis de manoeuvre, qui est vissée dans le bloc de butée taraudée qui relie, en outre, la plaque d'appareillage métallique au corps de l'appareillage électrique, de sorte qu'il existe une continuité électrique entre les griffes et la plaque d'appareillage.

Le corps 14 est ainsi, certes, isolé électriquement des griffes de fixation 19, mais il subsiste un risque d'endommagement des câbles électriques lors de la fixation de l'appareillage et de la mise sous pression des griffes par les vis.

La présente invention a pour but de pallier les inconvénients des fixations et supports de griffes connus à ce jour en proposant des griffes dont le montage permet l'obtention d'une isolation électrique par rapport au support d'appareillage et qui peuvent être soumises à des sollicitations mécaniques élevées sans risque de déformation de leur support.

A cet effet, elle a pour objet un dispositif de fixation d'appareillages électriques selon la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale et en coupe représentant le montage des griffes conformes à l'invention, suivant deux demi-vues, la demi-vue de droite représentant la griffe en position escamotée et la demi-vue de gauche représentant la griffe en position déployée de service ;
la figure 2 est une vue éclatée en perspective d'un appareillage muni des griffes conformes à l'invention ;
la figure 3 est une vue partielle, en coupe, à plus grande échelle, représentant la griffe escamotée selon la demi-vue de droite de la figure 1, et
la figure 4 est une vue partielle en plan correspondant à la figure 3.

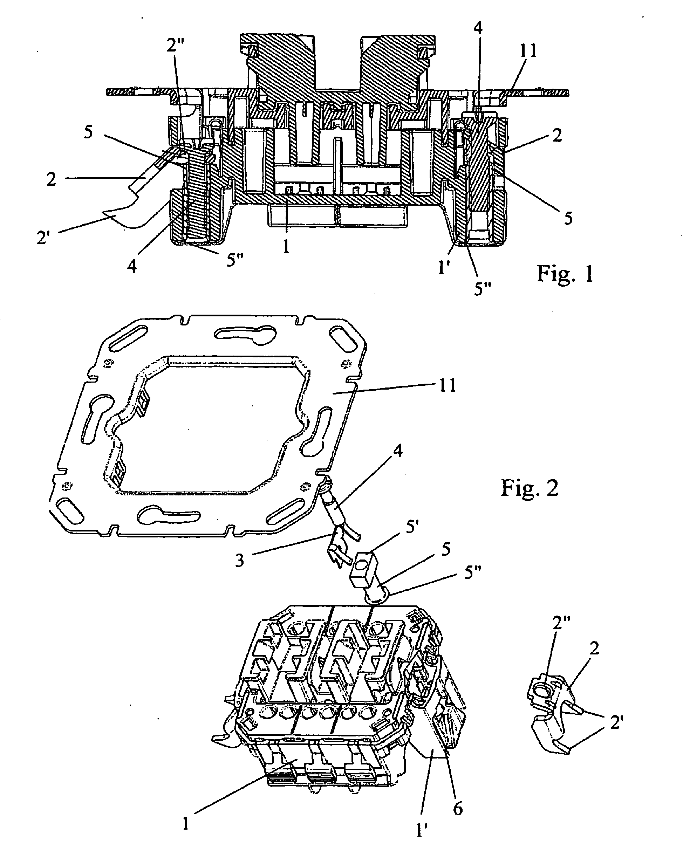

Les figures 1 et 2 des dessins annexés représentent un appareillage semi-encastré 1, électrique, domestique, tel qu'une prise de courant, un interrupteur, un détecteur infrarouge... muni de griffes 2 de fixation dans une boîte d'encastrement, non représentée, chaque griffe étant pourvue de dents 2' destinées à pénétrer dans la paroi de la boîte d'encastrement et d'un dispositif de rappel 3. En l'occurrence, l'appareillage électrique 1 représenté aux figures 1 et 2 est un interrupteur et est monté par encliquetage sur un support d'appareillage 11.

Les griffes 2 présentent une forme générale en U ou en étrier, dont les deux ailes verticales parallèles se terminent par les dents 2' et dont l'âme est pourvue d'un perçage 2" de passage d'une vis de serrage 4. Cette vis de serrage 4 est serrée dans le corps de l'appareillage électrique 1 pour réaliser le déplacement de la griffe 2 en direction de son support 1' du corps 1 en vue du déploiement des ailes la constituant et de l'accrochage des dents 2' dans la paroi de la boîte d'encastrement.

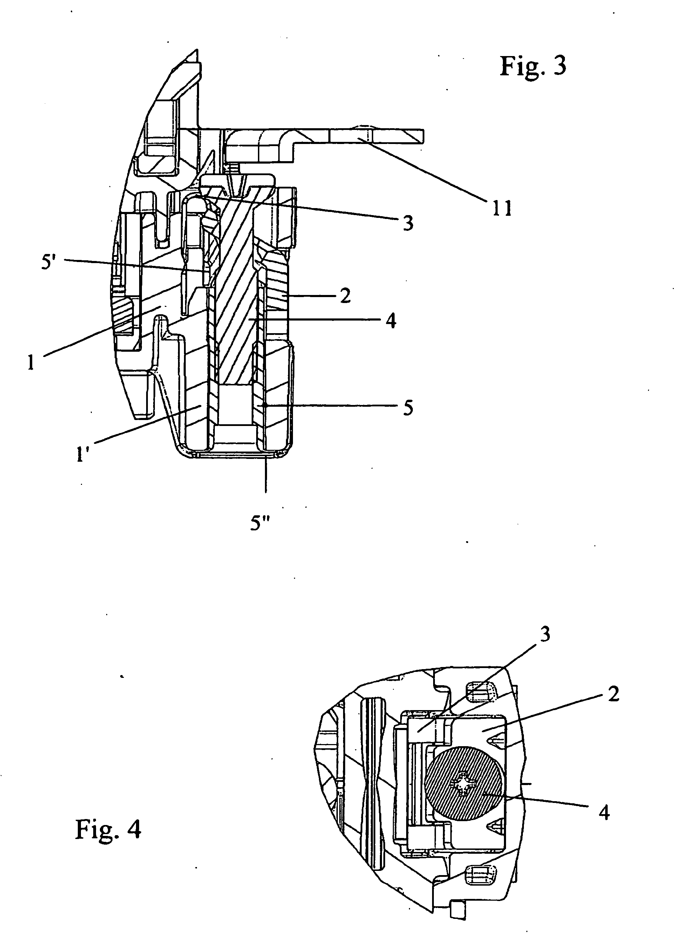

Conformément à l'invention, chaque griffe 2 est montée sur son support correspondant 1' du corps de l'appareillage 1 par l'intermédiaire d'un bloc de butée taraudé, inséré 5 dans ledit support 1' et dans lequel est vissée la vis 4 de serrage de la griffe 2, le bloc de butée 5 dépassant hors du support 1' pour former un palier métallique rigide d'appui et de basculement pour la griffe 2, qui est isolée électriquement par rapport au support d'appareillage 11. En effet, comme il ressort plus particulièrement des figures 1 et 3, le support d'appareillage 11 est solidarisé avec le corps 1 de l'appareillage sans être en contact ni avec les vis 4 de serrage des griffes 2, ni avec lesdites griffes 2. En outre, chaque bloc de butée 5 est majoritairement noyé dans le support 1' correspondant du corps de l'appareillage 1, de sorte qu'il ne peut pas non plus être en contact avec le support d'appareillage 11 et que ce dernier est donc parfaitement isolé par rapport aux griffes 2.

Afin de favoriser le basculement de la griffe 2, l'âme reliant les ailes verticales du U ou étrier la formant s'étend de manière inclinée par rapport à l'axe longitudinal desdites ailes.

Le bloc de butée 5, plus particulièrement visible sur la figure 2 des dessins annexés, est constitué par un fût central creux taraudé, pourvu à sa partie supérieure d'un élément 5', s'étendant transversalement au fût 5 et présentant avantageusement une section quadrangulaire, et fixé dans le support 1' du corps de l'appareillage 1 par l'intermédiaire d'un sertissage 5", l'élément 5' de la partie supérieure étant inséré dans un logement correspondant de la partie supérieure du support 1' du corps de l'appareillage 1 et dépassant hors de ce logement par au moins une arête tournée vers l'extérieur du corps de l'appareillage 1 et formant un palier d'appui et de basculement pour la griffe 2. Le sertissage du bloc de butée 5 sur le support 1' du corps de l'appareillage 1 s'effectue après insertion du fût 5 dans un perçage correspondant 1" du support 1' du corps de l'appareillage 1 et l'élément 5' fait office de contre-butée pendant l'opération de sertissage.

Chaque griffe 2 s'appuie contre un dispositif de rappel 3, inséré dans le support l' en arrière de l'axe du bloc de butée 5 et de la vis de serrage 4 et formé par une lame de ressort estampée et pliée présentant une extrémité d'appui constituée par deux ailes parallèles s'étendant de part et d'autre de cet axe et s'appuyant contre l'âme du U formant la griffe 2, dans le prolongement des ailes verticales de ce U. Ainsi, du fait du montage de la griffe 2 sur la vis 4, l'appui des extrémités de l'âme du U formant la griffe 2 contre les ailes de la lame de ressort formant le dispositif de rappel 3, ledit dispositif de rappel 3 a tendance à appliquer l'âme du U formant la griffe 2 contre la tige filetée de la vis 4 et ainsi à faire basculer ladite griffe 2 dans une direction selon laquelle les ailes verticales du U la formant, et donc les dents 2', sont pivotées en direction du corps de l'appareillage 1, en position escamotée des griffes 2.

Pour favoriser un escamotage total des griffes 2 et en particulier de leurs dents 2' et éviter ainsi une détérioration de l'isolation de câbles se trouvant dans le boîtier d'encastrement, il est prévu, selon une autre caractéristique de l'invention, de munir chaque support 1' du corps de l'appareillage 1, de part et d'autre du logement de réception du bloc de butée 5, de rainures verticales 6 de réception des ailes verticales du U formant la griffe 2, ainsi que des dents 2' prévues aux extrémités desdites ailes, la profondeur de ces rainures étant avantageusement légèrement supérieure à l'épaisseur desdites ailes avec les dents 2'. Ainsi, en position de repos des griffes 2, leurs ailes et, en particulier, leurs dents 2' sont entièrement escamotées dans les rainures 6, de sorte qu'il n'existe aucune aspérité sur le corps de l'appareillage 1. Il s'ensuit que la sécurité des opérateurs contre des égratignures est également assurée.

Le montage des griffes 2 conforme à l'invention est particulièrement simple à effectuer et rapide, chaque griffe 2 pouvant être insérée latéralement sur le support 1' de manière à amener leur âme au-dessus du bloc de butée 5, le perçage 2" de ladite âme étant amené au-dessus du taraudage de ce dernier, puis la vis de serrage 4 étant mise en place. Par serrage de la vis 4, la griffe 2 est poussée en direction du bloc de butée 5 jusqu'à venir en appui par son âme inclinée contre l'arête extérieure dudit bloc de butée 5.

Pendant la poursuite du serrage de la vis 4, l'âme de la griffe 2 effectue alors un pivotement autour de l'arête extérieure du bloc de butée 5 et ses ailes munies des dents 2' sortent des rainures verticales 6 des supports 1' jusqu'à entrer en contact avec la paroi intérieure d'un boîtier d'encastrement ou analogue, un serrage complémentaire de la vis 5 assurant un accrochage des dents 2' dans ladite paroi.

Du fait d'un contact métal-métal entre chaque griffe 2 et le bloc de butée 5 correspondant et du serrage de la vis 4 dans ledit bloc de butée 5, il est possible d'exercer une force de serrage des griffes 2 plus importantes que celles qui pouvaient être exercées jusqu'à ce jour avec le montage des griffes existant. En effet, le bloc de butée 5 étant métallique, l'appui de la griffe 2 sur l'arête de ce bloc 5 s'effectue sans déformation possible dudit bloc, de sorte que la force exercée par la vis de serrage 4 est entièrement transmise à la griffe 2 et transformée en un mouvement de pivotement.

En outre, la constitution même du bloc de butée 5 qui est inséré dans le support 1' du corps de l'appareillage 1, permet l'obtention d'un support 1' particulièrement rigide et ne risquant pas de se déformer en cas d'exercice d'une forte pression sur la vis de serrage 4, par exemple lors de la mise en place de l'appareillage, de sorte qu'une destruction dudit appareillage est évitée.

Enfin, le dispositif de rappel sous forme d'un ressort à lame pliée inséré dans le support 1' derrière l'axe du bloc de butée 5 et de la vis de serrage 4 permet d'assurer une force de rappel constante de la griffe 2 en position de repos, tout en permettant un montage aisé de ladite griffe 2. Il est rappelé à cet effet que dans les modes de réalisation des griffes connues à ce jour, les dispositifs de rappel en position de repos présentent généralement d'importantes difficultés de montage.

Grâce à l'invention, il est possible de réaliser des griffes pour appareillages électriques, domestiques encastrés à monter dans des boîtes d'encastrement permettant une manoeuvre et un guidage précis des griffes, tout en assurant une excellente tenue mécanique, même pour une utilisation en condition de montage sévère.

Par ailleurs, le montage de griffe conforme à l'invention permet d'assurer une parfaite isolation électrique de ces dernières par rapport au support d'appareillage.

De plus, les griffes pouvant être totalement escamotées dans leur support 1' correspondant, elles sont totalement protégées contre un risque de détérioration de câble lors de la mise en place de l'appareillage, ainsi que contre un risque de blessure des opérateurs.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de fixation d'appareillages électriques (1) domestiques, semi-encastrés tels que les prises de courant, les interrupteurs, les détecteurs infrarouges, etc.., fixés dans des boîtes d'encastrement, comportant des griffes de fixation (2), montées chacune sur son support correspondant (1') du corps de l'appareillage (1) par l'intermédiaire d'un bloc de butée (5) taraudé, inséré dans ledit support (l') et dans lequel est vissée la vis de serrage (4) de la griffe (2), **caractérisé en ce que** le bloc de butée (5) dépasse hors du support (1') pour former un palier métallique rigide d'appui et de basculement pour la griffe (2), qui est isolée électriquement par rapport au support d'appareillage (11).

2. Dispositif, suivant la revendication 1, **caractérisé en ce que** les griffes présentent une forme générale en U ou en étrier, dont les deux ailes verticales parallèles se terminent par les dents (2') et dont l'âme reliant lesdites ailes verticales s'étend de manière inclinée par rapport à l'axe longitudinal desdites ailes et est pourvue d'un perçage (2") de passage d'une vis de serrage (4).

3. Dispositif, suivant la revendication 1, **caractérisé en ce que** chaque bloc de butée (5) est constitué par un fût central creux taraudé, pourvu à sa partie supérieure d'un élément (5'), s'étendant transversalement au fut (5) et présentant une section quadrangulaire, et fixé dans le support (1') du corps de l'appareillage (1) par l'intermédiaire d'un sertissage (5"), l'élément (5') de la partie supérieure étant inséré dans un logement correspondant de la partie supérieure du support (l') du corps de l'appareillage (1) et dépassant hors de ce logement par au moins une arête tournée vers l'extérieur du corps de l'appareillage (1) et formant un palier d'appui et de basculement pour la griffe (2).

4. Dispositif, suivant l'une quelconque des revendications 1 à 3, **caractérisé en ce que** les griffes s'appuient chacune contre un dispositif de rappel (3), inséré dans le support (l') en arrière de l'axe du bloc de butée (5) et de la vis de serrage (4) et formé par une lame de ressort estampée et pliée présentant une extrémité d'appui constituée par deux ailes parallèles s'étendant de part et d'autre de cet axe et s'appuyant contre l'âme du U formant la griffe (2), dans le prolongement des ailes verticales de ce U.

5. Dispositif, suivant l'une quelconque des revendications 1, 3 et 4, **caractérisé en ce que** chaque support (1') du corps de l'appareillage (1) est muni, de part et d'autre du logement de réception du bloc de butée (5), de rainures verticales (6) de réception des ailes verticales du U formant la griffe (2), ainsi que des dents (2') prévues aux extrémités desdites ailes, la profondeur de ces rainures étant légèrement supérieure à l'épaisseur desdites ailes avec les dents (2').

## Claims

1. Device for securing domestic, semi-embedded electrical equipment (1) such as sockets, switches, infrared detectors etc., secured into housing boxes, comprising securing clips (2), which are each mounted on a corresponding support (1') on the body of the equipment (1) by means of a threaded stop block (5) which is inserted into said support (1') and into which the clamping screw (4) of the clip (2) is screwed, **characterised in that** the stop block (5) overshoots the support (1') to form a rigid metal support and rocking bearing for the clip (2), which is insulated electrically in relation to the support for the equipment (11).

2. Device according to claim 1, **characterised in that** the clips are generally in the form of a U or stirrup, wherein the two parallel vertical arms have teeth (2') at the end and the web connecting said vertical arms extends in an inclined manner in relation to the longitudinal axis of said arms and is provided with a bore (2") for the passage of a clamping screw (4).

3. Device according to claim 1, **characterised in that** each stop block (5) is formed by a central hollow threaded shaft which is provided at its upper end with an element (5'), which extends transversely to the shaft (5) and has a quadrangular cross section and is secured into the support (1') of the body of the equipment (1) by means of crimping (5"), wherein the element (5') of the upper part is inserted into a corresponding housing of the upper part of the support (1') of the body of the equipment (1) and overshoots said housing by at least one catch facing the outside of the body of the equipment (1) and forms a support and rocking bearing for the clip (2).

4. Device according to any one of claims 1 to 3, **characterised in that** the clips each bear against a return device (3), which is inserted into the support (1') at the rear of the axis of the stop block (5) and the clamping screw (4) and is shaped by a stamped and folded spring blade which has a bearing end formed by two parallel arms extending on either side of said axis and bearing
against the web of the U forming the clip (2) in the extension of the vertical arms of said U.

5. Device according to any one of claims 1, 3 and 4, **characterised in that** each support (1') of the body of the equipment (1) is provided on either side of the housing for receiving the stop block (5), with vertical grooves (6) for receiving the vertical arms of the U forming the clip (2), as well as teeth (2') provided at the ends of said arms, the depth of said grooves being slightly greater than the thickness of said arms with teeth (2').

## Patentansprüche

1. Fixierungsvorrichtung von elektrischen, teilweise eingebauten häuslichen Geräten (1), wie etwa Steckdosen, Schalter, Infrarotdetektoren etc., die in Einbaugehäusen fixiert sind, welche Fixierungskrallen (2) umfasst, wobei jede Fixierungskralle auf ihrem entsprechenden Träger (1') des Gerätekörpers (1) mittels eines mit einem Gewinde versehenen Stützblocks (5) montiert ist, der in den Träger (1') eingefügt ist und in welchem die Klemmschraube (4) der Kralle (2) eingeschraubt ist, **dadurch gekennzeichnet, dass** der Stützblock (5) über den Träger (1') hinausragt, um einen metallischen festen Block zum Abstützen und Schwenken der Kralle (2) auszubilden, die bezüglich des Geräteträgers (11) elektrisch isoliert ist.

2. Vorrichtung nach Anspruch 1, **dadurch gekennzeichnet, dass** die Krallen die allgemeine Form eines U oder eines Bügels aufweisen, bei dem die beiden parallelen vertikalen Flügel mit Zähnen (2') enden und bei dem der Steg, der die vertikalen Flügel des U oder Bügels verbindet, sich in geneigter Weise bezüglich der Längsachse der Flügel erstreckt und mit einer Durchgangsbohrung (2") einer Klemmschraube (4) versehen ist.

3. Vorrichtung nach Anspruch 1, **dadurch gekennzeichnet, dass** jeder Stützblock (5) von einem zentralen, hohlen, mit einem Gewinde versehenen Schaft gebildet ist, der an seinem oberen Abschnitt mit einem Element (5') versehen ist, das sich quer zum Schaft (5) erstreckt und einen rechteckigen Querschnitt aufweist, und an dem Träger (1') des Gerätekörpers (1) mittels einer Bördelung (5") fixiert ist, wobei das Element (5') des oberen Abschnitts in einen entsprechenden Sitz des oberen Abschnitts des Trägers (1') des Gerätekörpers (1) eingefügt ist, und über diesen Sitz um mindestens eine nach außen, in Richtung des Äußeren des Gerätekörpers (1) gerichteten Wulststeg hinausragt und einen Block zum Stützen und Schwenken für die Kralle (2) bildet.

4. Vorrichtung nach einem der Ansprüche 1 bis 3, **dadurch gekennzeichnet, dass** die Krallen sich jeweils gegen eine Rückholvorrichtung (3) stützen, die in den Träger (1') hinter der Achse des Stützblocks (5) und der Klemmschraube (4) eingefügt ist und durch eine gestanzte und gefaltete Federklinge gebildet ist, die ein Stützende aufweist, welches von zwei parallelen Flügel gebildet wird, welche sich beiderseits dieser Achse erstrecken und sich gegen den Steg des U, das die Kralle (2) bildet, in der Verlängerung der vertikalen Flügel dieses U abstützen.

5. Vorrichtung nach einem der Ansprüche 1, 3 und 4 **dadurch gekennzeichnet, dass** jeder Träger (1') des Gerätekörpers (1) auf beiden Seiten des Aufnahmesitzes des Stützblocks (5) mit vertikalen Nuten (6) zur Aufnahme der vertikalen Flügel des U, welches die Krallen (2) bildet, ebenso wie der Zähne (2'), die an den äußeren Enden der Flügel vorgesehen sind, versehen ist, wobei die Tiefe der Nuten (6) etwas größer als die Dicke der Flügel mit den Zähnen (2') ist.
